# EUROPEAN PATENT APPLICATION

(11) **EP 3 062 209 A1**
(43) Date of publication of application: **31.08.2016**
(21) Application number: 14867529.1
(22) Date of filing: 20.06.2014
(51) Int. Cl.: G06F 3/06

(54) **METHOD AND APPARATUS FOR IMPROVING DISK ARRAY PERFORMANCE**

(30) Priority: 02.12.2013 CN 201310638469
(71) Applicant: ZTE Corporation, Shenzhen, Guangdong 518057 (CN)
(72) Inventor: LI, Guining, Shenzhen Guangdong 518057 (CN)
(74) Representative: Brevalex
(86) International application number: PCT/CN2014/080452
(87) International publication number: WO 2015/081690

(57) **Abstract**

A method and an apparatus for improving disk array performance relate to the technical field of computer systems. The method thereof comprises the following steps: setting a buffer between a disk array RAID and a disk block device; when write 10 is delivered to the disk array, temporarily saving data required by the disk array to the buffer; through organizing the data that is required by the disk array and temporarily saved by the buffer, providing corresponding query and update interfaces; and using the interfaces to perform query and update required by the write 10.

## Description

### TECHNICAL FIELD

The present disclosure relates to the field of computer systems, and in particular to a method and device for improving performance of a Redundant Array of Independent Disks (RAID).

### BACKGROUND

Redundant Arrays of Inexpensive Disks (RAID5/6) for data protection are widely used in the field of Storage Area Network (SAN) and Network Attached Storage (NAS). Such redundancy-based data protection will exist for a long time thanks to its advantages in terms of disk resource occupation. RAID is used for RAID5/6 hereafter.

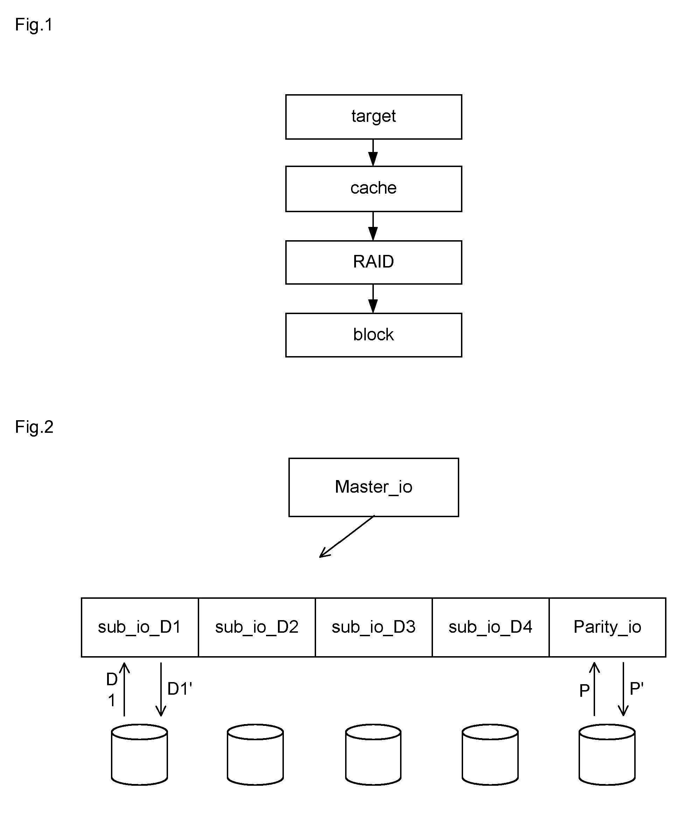

An Input/Output (I/O) stack of a conventional array is as shown in Fig.1. Generally, an I/O is implemented by writeback. An I/O organized (e.g. a WRITE I/O rearranged and combined) in a cache is sent to a RAID module. In general, one of the most important functions of the RAID module is to perform RAID5/6 computation on incoming data. At this point, the I/O has left the cache and cannot be cached again, leading to some performance problems as discussed below.

Implementation of the RAID will impact I/O performance due to features of a RAID algorithm thereof. For example, when a WRITE I/O is issued, the RAID has to perform parity data computation over a range of a stripe, which applies only to a case of a full stripe. If the issued data are not of the size of a full stripe, it is mostly likely that data of another strip may first be read out from the RAID, then parity data computation may be performed on the read-out data and the newly-written data. This is called "reconstruct write (RCW)".

In another case, things may be slightly better, where only parity data of a previous stripe and the old-version original data part are read out, the three values are checked accordingly to generate new parity data, and then the new-version written data and the newly generated parity data are written to corresponding stripe positions. This is called "Read-Modify-Write".

Both cases may involve reading out old-version data or parity data from a disk and re-computing the parity data, both processes being operated on a main path of the I/O, which may have a major impact on operational efficiency of the entire I/O stack. Theoretically speaking, for redundant computation, parity computation is indispensable and thus impact thereof will be inevitable. Thus, to improve operational efficiency of the entire RAID, improvement has to be made as to how the old-version data are read out from a disk.

Fig.2 shows a solution by "Read-Modify-Write", where old-version D1 data and parity data are read, such that subsequent computation may be performed on parity data of RAID5/6.

Another problem of the RAID is that a stripe may consist of multiple strips respectively located at different disks. During a disk-writing operation, the system per se may not be able to ensure atomicity of data being written to the disks. By atomicity it means that the data belonging to the multiple disks are all written successfully or are all written unsuccessfully. Failing to meet the atomic characteristics may lead to a serious problem. For example, when some strips of the stripe are written successfully while the others of the stripe are not, the stripe on the RAID fails to meet stripe consistency, i.e. when a disk corresponding to a strip of the stripe is broken, it is impossible to reconstruct the correct data from the stripe on the RAID. This is called a RAID write hole.

### SUMMARY

To this end, embodiments herein provide a method and device for improving performance of a Redundant Array of Independent Disks, capable of reducing data to be read for disk access and preventing a RAID write hole.

According to an aspect of embodiments herein, a method for improving performance of a Redundant Array of Independent Disks (RAID) includes:
setting a cache between a RAID and a disk block;
when a WRITE Input/Output (I/O) is issued to the RAID, temporarily storing data required by the RAID in the cache;
providing an interface corresponding to search and update required for the WRITE I/O by organizing the data required by the RAID temporarily stored in the cache; and performing the search and update required for the WRITE I/O through the interface.

The organizing the data required by the RAID temporarily stored in the cache may include:
dividing the data required by the RAID into a plurality of stripes suitable for concurrent processing.

The organizing the data required by the RAID temporarily stored in the cache may further include: forming a Logical Unit Number (LUN) binary tree with all stripes belonging to one LUN. The LUN binary tree may include the one LUN as a root of the LUN binary tree, stripe search indices as a first-layer search tree, and the all stripes belonging to the one LUN as a second-layer search tree. Stripes in the second-layer search tree may be leaves. The root and the leaves may form the interface for the search and update.

The forming a Logical Unit Number (LUN) binary tree with all stripes belonging to one LUN may include:
allocating an identifier (ID) to each of the all stripes belonging to the one LUN;
setting the ID of a stripe as a stripe search index; and
forming a leaf by linking each of the all stripes belonging to the one LUN to a branch of the LUN binary tree corresponding to the stripe search index of the each of the all stripes belonging to the one LUN.

A leaf may include:
a number of headers, each being a pointer; and
a number of data pages being pointed to respectively by the number of headers.

The method may further include: performing dual-control mirrored protection on the data required by the RAID using two such caches.

The data required by the RAID may include data to be written to a disk and data to be read out from a disk.

A queue of the data to be written to a disk may be formed by allocating an ID to each stripe to be written to disks in an ascending sequence.

According to another aspect of embodiments herein, a device for improving performance of a Redundant Array of Independent Disks (RAID) includes:
a cache-setting module configured for: setting a cache between a RAID and a disk block;
a data-storing module configured for: when a WRITE Input/Output (I/O) is issued to the RAID, temporarily storing data required by the RAID in the cache;
an interfacing module configured for: providing an interface corresponding to search and update required for the WRITE I/O by organizing the data required by the RAID temporarily stored in the cache; and
a search-update module configured for: performing the search and update required for the WRITE I/O through the interface.

The interfacing module may be configured for organizing the data required by the RAID temporarily stored in the cache by: forming a Logical Unit Number (LUN) binary tree with all stripes belonging to one LUN. The LUN binary tree may include the one LUN as a root of the LUN binary tree, stripe search indices as a first-layer search tree, and the all stripes belonging to the one LUN as a second-layer search tree. Stripes in the second-layer search tree may be leaves. The root and the leaves may form the interface for the search and update.

In process execution, the cache-setting module, the data-storing module, the interfacing module, and the search-update module may be implemented with a Central Processing Unit (CPU), a Digital Signal Processor (DSP), or a Field-Programmable Gate Array (FPGA).

Compared to prior art, the present disclosure may have beneficial effect as follows.

According to embodiments herein, a RAID-dedicated cache is provided between a RAID and a block, forming effective data organization in the RAID and a series of mechanisms to be used in concert with each other, such that date to be used by the RAID may be temporarily stored in a smart way, thereby improving performance of the RAID.

### BRIEF DESCRIPTION OF THE DRAWINGS

Fig.1 is a diagram of an I/O stack of a conventional array according to related art.
Fig.2 is a diagram of a Read-Modify-Write mode according to related art.
Fig.3 is a flowchart of a method for improving performance of a RAID according to an embodiment herein.
Fig.4 is a diagram of a device for improving performance of a RAID according to an embodiment herein.
Fig.5 is a diagram of a device for improving performance according to an embodiment herein.
Fig.6 is a diagram of data organization according to an embodiment herein.
Fig.7 is a diagram of organization of a second-layer search table according to an embodiment herein.
Fig.8 is a diagram of organization of pages under a stripe according to an embodiment herein.
Fig.9 is a diagram of mirrored data protection according to an embodiment herein.
Fig.10 is a flowchart of storing and using old data and computed parity data according to an embodiment herein.

### DETAILED DESCRIPTION

Embodiments herein are elaborated below with reference to drawings. It should be understood that embodiments below are illustrative and explanatory, and are not intended to limit the present disclosure.

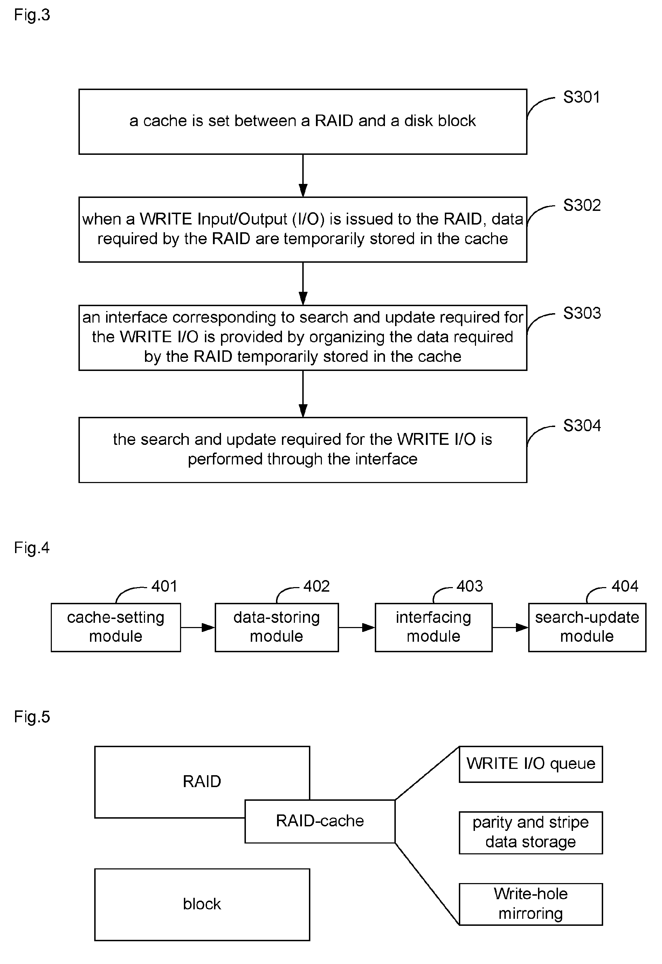

Fig.3 is a flowchart of a method for improving performance of a RAID according to an embodiment herein. As shown in Fig.3, the method includes steps as follows.

In step S301, a cache is set between a RAID and a disk block.

In step 302, when a WRITE Input/Output (I/O) is issued to the RAID, data required by the RAID are temporarily stored in the cache.

In step 303, an interface corresponding to search and update required for the WRITE I/O is provided by organizing the data required by the RAID temporarily stored in the cache.

In step 304, the search and update required for the WRITE I/O is performed through the interface.

The data required by the RAID temporarily stored in the cache may be organized by dividing the data required by the RAID into a plurality of stripes suitable for concurrent processing.

The data required by the RAID temporarily stored in the cache may further be organized by forming a Logical Unit Number (LUN) binary tree with all stripes belonging to one LUN. The LUN binary tree may include the one LUN as a root of the LUN binary tree, stripe search indices as a first-layer search tree, and the all stripes belonging to the one LUN as a second-layer search tree. Stripes in the second-layer search tree may be leaves. The root and the leaves may form the interface for the search and update.

The LUN binary tree may be formed with all stripes belonging to one LUN by: allocating an identifier (ID) to each of the all stripes belonging to the one LUN; setting the ID of a stripe as a stripe search index; and forming a leaf by linking each of the all stripes belonging to the one LUN to a branch of the LUN binary tree corresponding to the stripe search index of the each of the all stripes belonging to the one LUN.

A leaf may include: a number of headers, each being a pointer; and a number of data pages being pointed to respectively by the number of headers.

Dual-control mirrored protection may be performed on the data required by the RAID using two such caches. The data required by the RAID may include data to be written to a disk and data to be read out from a disk.

A queue of the data to be written to a disk may be formed by allocating an ID to each stripe to be written to disks in an ascending sequence.

Fig.4 is a diagram of a device for improving performance of a RAID according to an embodiment herein. As shown in Fig.4, the device includes: a cache-setting module 401 configured for: setting a cache between a RAID and a disk block; a data-storing module 402 configured for: when a WRITE Input/Output (I/O) is issued to the RAID, temporarily storing data required by the RAID in the cache; an interfacing module 403 configured for: providing an interface corresponding to search and update required for the WRITE I/O by organizing the data required by the RAID temporarily stored in the cache; and a search-update module 404 configured for: performing the search and update required for the WRITE I/O through the interface.

A Logical Unit Number (LUN) binary tree may be formed with all stripes belonging to one LUN. The LUN binary tree may include the one LUN as a root of the LUN binary tree, stripe search indices as a first-layer search tree, and the all stripes belonging to the one LUN as a second-layer search tree. Stripes in the second-layer search tree may be leaves. The root and the leaves may form the interface for the search and update.

Fig.5 is a diagram of a device for improving performance according to an embodiment herein. As shown in Fig.5, a RAID-cache (cache dedicated to a RAID), as a temporary storage for data of the RAID, may be provided between the RAID and a disk block. The data of the RAID may include old-version data and parity data. That is, D1 data and P data in Fig.2 have to be protected before WRITE to an entire stripe completes. Mirrored storage may be performed by the RAID-cache on D1 data and P data. The RAID-cache per se may be required to be capable of mirrored storage. The RAID-cache may be write-hole proof when provided with logic for ensuring stripe consistency.

The RAID-cache may serve to temporarily store all data of a stripe in memory before the all data of the stripe are correctly written to a disk. The data temporarily stored in the memory will be discarded after the data of the stripe are all written. In case during writing data of an entire stripe to the RAID, an error occurs in a disk, the errored part may be overwritten with old-version data stored in the memory, thereby achieving stripe-consistency protection.

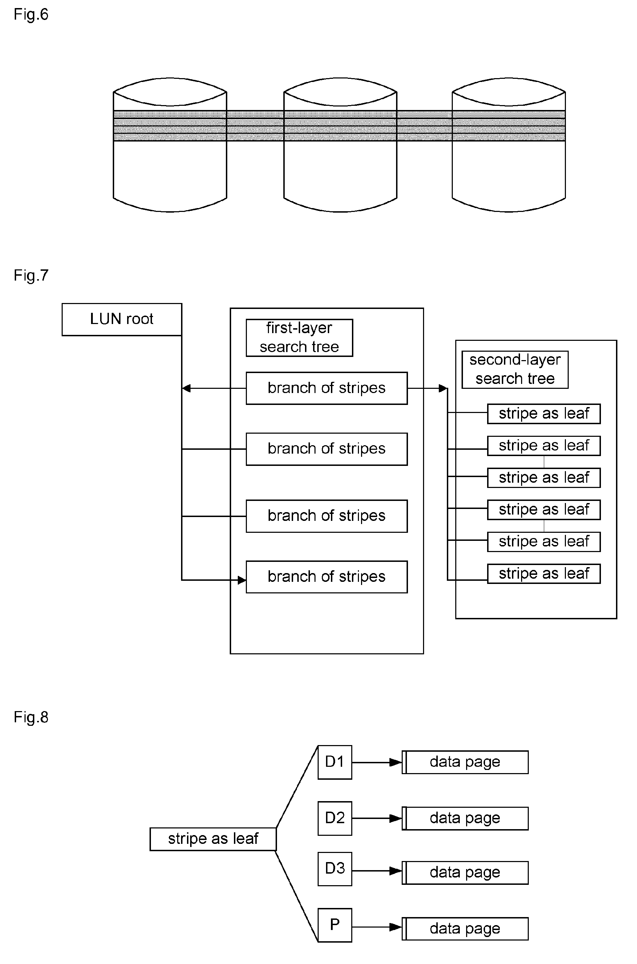

Fig.6 is a diagram of data organization according to an embodiment herein. As shown in Fig.6, disk stripeing on a conventional RAID is identical to that on a future virtual array. The only difference is that the disks are to be replaced by virtual blocks, and the virtual blocks are to be divided into stripes.

A stripe per se may be settable, i.e., may vary. The stripe may consist of multiple strips. A strip may consist of multiple pages. When a RCW or a Read-Modify-Write of the RAID requires data readout, data of a stripe corresponding to the write data may have to be read out, too. It is therefore reasonable to use a stripe as minimal granularity of organization.

According to the present disclosure, organization is implemented based on stripes. Continuity of addresses of the stripes means continuity of on-disk addresses. Hence a RAID-cache may include local logic for a disk access request. For example, for a sequential I/O, sending data of multiple stripes at one time may allow better use of a back-end bandwidth. In addition, the RAID-cache may also adopt a smarter disk-flushing algorithm. For example, more data of full stripes may selectively be flushed together to the disks. The RAID-cache may allow more data to be accumulated, such that it is easier to have data of a full stripe in memory.

When flush-to-disk completes, if there is enough cache space in the the RAID-cache, the written new data may remain in the cache, and later be removed in a Most Recently Used (MRU) mode. For data of an entire stripe that have been completely written, old parity data and old data thereof, as well as mirrored data, may be deleted.

Fig.7 is a diagram of organization of a second-layer search table according to an embodiment herein. As shown in Fig.7, IDs may be allocated to stripes belonging to a Logical Unit Number (LUN), generally in a ascending sequence. Then, the ID of a stripe may be set as a stripe search index for finding the stripe. The entire LUN may serve as a root. A stripe may be linked to a fixed branch of the LUN tree according to the stripe search index of the stripe. A LUN binary tree may be adopted for better search efficiency.

First-layer search of a conventional array differs from that of a virtual array. As a conventional array consists of disks, a search for a stripe may be defined as a certain number of searches. For example, for a 10TB LUN and a 32KB strip, with a 5+1 RAID, first-layer search may correspond to 8192 stripe sets, and thus there are a total number of 8192 nodes on the first layer. Each first-layer node may further include a number of 8192 stripes. Therefore, a stripe may be found quickly through two-layer search. The number of the sets may be determined by weighing both a memory space occupied by the nodes therefor and search efficiency thereof.

A virtual mode works in unit of block. A block size of a virtual array may vary depending on granularity adopted by an array manufacturer. For example, for a RAID consisting of blocks each of 512MB, said search table may be organized differently, with 4096 first-layer nodes, each including 16384 second-layer nodes, i.e., leaves.

Binary tree search can be performed quickly. As the whole search is actually performed on the path of the I/O, it is extremely important for the search to be performed quickly, which will directly affect performance of the entire RAID system. An exclusive linear-table mode may lead to of excessive memory space occupation by table nodes. A binary-tree mode may be a trade-off between the search efficiency and the memory overhead. In general, the composition may be changed flexibly, depending mainly on a requirement on memory occupation and search delay.

Fig.8 is a diagram of organization of pages under a stripe according to an embodiment herein. As shown in Fig.8, D1/D2/D3/P, as a header data structure, may include a data member as a pointer array, which may include a data-containing page. Effective organization of such data may provide an interface corresponding to search and update required for the WRITE I/O. A corresponding support may be provided to the RAID module through such an interface.

A stripe may include a number of strips. A strip may include data identical to those on a disk, except that such data are currently stored in the memory. Based on design of metadata of a strip, a header of a data structure of the strip may have to include information for locating the data on a disk corresponding to the data stored in the memory (such as a disk ID, a disk address, and a data length).

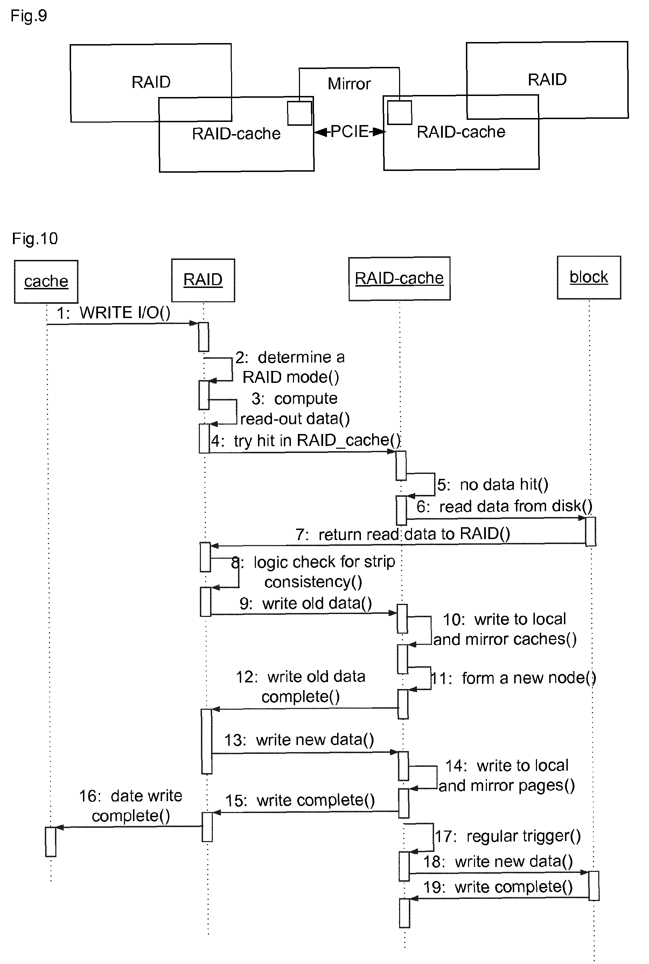

Fig.9 is a diagram of mirrored data protection according to an embodiment herein. As shown in Fig.9, written data may firstly be written to memory space occupied by the RAID. After data writing completes, dual-control mirroring has to be adopted. In this way, the data may arrive at the RAID-cache and have already been protected in effect. At this point, as to a module on the RAID-cache, the entire process of WRITE I/O has been completed. Since the block memory per se may be stored in a zero-copy mode (i.e. the data will not be copied again when entering the RAID-cache), the memory experiences a process of being allocated by an upper layer and finally being stored in the RAID-cache. One concern regarding such a process may be that the RAID-cache may not take up the whole memory, otherwise the upper layer will not be able to allocate enough memory pages for WRITE allocation.

A small box in a RAID-cache in Fig.9 may be a node in the organization as described above. In this way, data to be written to the RAID and data read out from a disk are stored in the RAID-cache, implementing localized caching of new written data and old data. When a controller powers down by accident, the stored data may be written to a disk relying on battery electricity, such that the data are stored. After the controller powers on again, the data (both new data and old data) may be recovered. This, plus implementation of logic for stripe consistency of part of the RAID, may allow consistent storage of content of an entire stripe.

Fig.10 is a flowchart of storing and using old data and computed parity data according to an embodiment herein. As shown in Fig.10, the flow may include steps as follows.

In step 1, a WRITE I/O may arrive at a RAID module.

In step 2, it may be determined whether to perform RCW or Read-Modify-Write by computing an address and a data length.

In step 3, a computed result may be returned.

In step 4, hit in the RAID-cache may be tried.

In step 5, if data hit in the RAID-cache fails, an I/O may be generated to perform disk write/read.

In step 6, data may be read for disk access.

In step 7, read data may be returned to the RAID directly for further processing.

In step 8, logic check for stripe consistency may be performed.

In step 9, old data may be written.

In step 10, the old data may be written to local and mirror caches.

In step 11, a new node (including the old data) may be formed at the mirror cache on the opposite end.

In step 12, writing of the old data may complete.

In step 13, new data may be written.

In step 14, the new data may be written into local and mirror pages.

In step 15, writing of the new data may complete.

In step 16, writing of the old data and the new data may complete.

In step 17, regular trigger may be performed in the RAID-cache.

In step 18, the new data may be written.

In step 19, writing of the new data may complete.

With such a process, the written data may in effect be written to the RAID-cache, and the entire process per se may include logic for stripe consistency, thereby improving reading efficiency in a normal state while preventing a write hole.

To sum up, the present disclosure does not aim at temporary storage of data. Instead, a basic requirement herein is to allow an efficient, simple operation, such as accessing, modification, etc., on the data stored temporarily by organizing the data effectively. For example, upon arrival of a RAID WRITE, it may be selected by a RAID algorithm to be a RAID Read-Modify-Write, which requires old-version data and old-version parity data thereof to be read out. The whole reading process will be much faster given such data are already in the memory. Secondly, a SAN may manage a large number of disks. Concurrent operation of the disks requires RAID concurrency. To allow quick and efficient operation of a disk, I/Os to be written to/read from the disk have to be queued by address. Both RAID concurrency and quick and efficient disk operation may be well supported by temporary storage of data.

To sum up, the present disclosure may have beneficial effect as follows.

According to embodiments herein, a RAID-dedicated cache is provided between a RAID and a block, forming effective data organization in the RAID and a series of mechanisms to be used in concert with each other, such that date to be used by the RAID may be temporarily stored in a smart way, thereby improving performance of the RAID.

What described are merely embodiments herein, and are not intended to limit the scope of protection of the present disclosure.

### Industrial Applicability

According to embodiments herein, a RAID-dedicated cache is provided between a RAID and a block, forming effective data organization in the RAID and a series of mechanisms to be used in concert with each other, such that date to be used by the RAID may be temporarily stored in a smart way, thereby improving performance of the RAID.

## Claims

1. A method for improving performance of a Redundant Array of Independent Disks (RAID), comprising:
setting a cache between a RAID and a disk block;
when a WRITE Input/Output (I/O) is issued to the RAID, temporarily storing data required by the RAID in the cache;
providing an interface corresponding to search and update required for the WRITE I/O by organizing the data required by the RAID temporarily stored in the cache; and performing the search and update required for the WRITE I/O through the interface.

2. The method according to claim 1, wherein the organizing the data required by the RAID temporarily stored in the cache comprises:
dividing the data required by the RAID into a plurality of stripes suitable for concurrent processing.

3. The method according to claim 2, wherein the organizing the data required by the RAID temporarily stored in the cache further comprises: forming a Logical Unit Number (LUN) binary tree with all stripes belonging to one LUN, the LUN binary tree comprising the one LUN as a root of the LUN binary tree, stripe search indices as a first-layer search tree, and the all stripes belonging to the one LUN as a second-layer search tree, wherein stripes in the second-layer search tree are leaves, and the root and the leaves form the interface for the search and update.

4. The method according to claim 3, wherein the forming a Logical Unit Number (LUN) binary tree with all stripes belonging to one LUN comprises:
allocating an identifier (ID) to each of the all stripes belonging to the one LUN;
setting the ID of a stripe as a stripe search index; and
forming a leaf by linking each of the all stripes belonging to the one LUN to a branch of the LUN binary tree corresponding to the stripe search index of the each of the all stripes belonging to the one LUN.

5. The method according to claim 4, wherein a leaf comprises:
a number of headers, each being a pointer; and
a number of data pages being pointed to respectively by the number of headers.

6. The method according to claim 4, further comprising: performing dual-control mirrored protection on the data required by the RAID using two such caches.

7. The method according to claim 6, wherein the data required by the RAID comprises data to be written to a disk and data to be read out from a disk.

8. The method according to claim 6, wherein a queue of the data to be written to a disk is formed by allocating an ID to each stripe to be written to disks in an ascending sequence.

9. A device for improving performance of a Redundant Array of Independent Disks (RAID), comprising:
a cache-setting module configured for: setting a cache between a RAID and a disk block;
a data-storing module configured for: when a WRITE Input/Output (I/O) is issued to the RAID, temporarily storing data required by the RAID in the cache;
an interfacing module configured for: providing an interface corresponding to search and update required for the WRITE I/O by organizing the data required by the RAID temporarily stored in the cache; and
a search-update module configured for: performing the search and update required for the WRITE I/O through the interface.

10. The device according to claim 9, wherein the interfacing module is configured for organizing the data required by the RAID temporarily stored in the cache by: forming a Logical Unit Number (LUN) binary tree with all stripes belonging to one LUN, the LUN binary tree comprising the one LUN as a root of the LUN binary tree, stripe search indices as a first-layer search tree, and the all stripes belonging to the one LUN as a second-layer search tree, wherein stripes in the second-layer search tree are leaves, and the root and the leaves form the interface for the search and update.
